# EUROPÄISCHE PATENTSCHRIFT

(11) **EP 2 405 547 B1**
(45) Veröffentlichungstag und Bekanntmachung des Hinweises auf die Patenterteilung: **12.04.2017**
(21) Anmeldenummer: 10305741.0
(22) Anmeldetag: 06.07.2010
(51) Int. Cl.: H02G 3/04

(54) **Anordnung zum feuchtigkeitsdichten Verbinden von zwei Geräten**
Assembly for linking two devices sealed against humidity
Agencement destiné à relier deux appareils de manière imperméable

(43) Veröffentlichungstag der Anmeldung: 11.01.2012
(73) Patentinhaber: Nexans, 75008 Paris (FR)
(72) Erfinder: Nachbauer, Otto, 92685, Floß (DE); Riedel, Richard, Dipl.-Ing., 92685, Floß (DE)
(74) Vertreter: Döring, Roger

(56) Entgegenhaltungen:
- WO-A1-2005/117222
- DE-U1- 20 308 169
- DE-U1-202009 003 265
- US-A1- 2002 033 269

## Beschreibung

Die Erfindung bezieht sich auf eine Anordnung gemäß dem Oberbegriff des Patentanspruchs 1.

Eine solche Anordnung geht aus der US 2002/0033269 A1 hervor.

Derartige Anordnungen sind bekannt und auf dem Markt erhältlich. Sie werden beispielsweise in der Automobiltechnik zum Verbinden von Sensoren mit einer Stromquelle und/oder mit einer Signalquelle und/oder mit einer Steuereinheit eingesetzt. Die dabei verwendeten Leiter können aus isolierten elektrischen Leitern bestehende Adern oder aus lichtleitenden optischen Fasern bestehende Adern sein. Die entsprechenden Leiter werden im folgenden nur noch "Adern" genannt. Die Adern müssen im Betrieb beispielsweise in einem Personenkraftwagen nicht nur mechanisch geschützt verlegt, sondern auch gegen Verschmutzung und insbesondere gegen Feuchtigkeit geschützt sein. Das wird in bisheriger Technik so durchgeführt, daß die in einem Schlauch aus Isoliermaterial untergebrachten Adern an bzw. in den Geräten mit sogenannter Einzeladerabdichtung feuchtigkeitsdicht mit Anschlußteilen verbunden werden. Zusätzlich wird der Schlauch auf dem jeweiligen Anschlußstutzen der Geräte beispielsweise mit einer Schlauchschelle festgelegt, meistens noch unter Einsatz von zusätzlichem Dichtungsmaterial, oder es werden die Anschlußstellen umschließende Gehäuse eingesetzt.

Aus der eingangs erwähnten US 2002/0033269 A1 geht eine Anordnung mit einem Schlauch zum Verbinden von zwei Geräten hervor, der auf seiner ganzen Länge außen und innen profiliert ist, und zwar beispielsweise durch ringförmig umlaufende Vertiefungen. Die Geräte dieser Anordnung sind an die nicht glatte Form des Schlauches angepaßt. Eines der Geräte wird beispielsweise durch Spritzgießen hergestellt, wobei das Spritzmaterial sowohl außen als auch innen in die umlaufenden Vertiefungen des Schlauches eindringt. Am anderen Ende des Schlauches ist ein als Stecker ausgeführtes Gerät angebracht, der umlaufende Vorsprünge aufweist, welche in die inneren Vertiefungen des Schlauches eingreifen und dort beispielsweise durch Reibung bzw. durch das Zusammenwirken der Vorsprünge des Steckers mit den Vertiefungen des Schlauches mit "press fit" gehalten sind.

Der Erfindung liegt die Aufgabe zugrunde, die eingangs geschilderte Anordnung zu vereinfachen.

Diese Aufgabe wird entsprechend den kennzeichnenden Merkmalen des Patentanspruchs 1 gelöst.

"Gerät" im Sinne der Erfindung kann ein Teil einer Kupplung sein, also ein Stecker oder eine Buchse, bei der in einem Gehäuse jeweils elektrische Kontaktteile oder optische Anschlußelemente angeordnet sind. Es kann sich auch um ein Gehäuse mit einer in einem Anschlußstutzen angebrachten Durchführung handeln, welches eine Einheit mit elektrischen Kontaktteilen und/oder optischen Anschlußelementen umschließt, an welche die im flexiblen Schlauch untergebrachten Adern anzuschließen sind. Der Einfachheit halber wird im folgenden weiter nur das Wort "Gerät" verwendet, durch welches alle möglichen Ausführungsformen desselben, insbesondere die im Vorangehenden erwähnten, erfaßt sind.

Die Abmessungen der Anschlußstutzen der beiden miteinander zu verbindenden Geräte sind bekannt. Der Schlauch ist an seinen beiden axialen Enden an diese Abmessungen angepaßt. Seine lichte Weite ist dabei an den beiden Enden etwas kleiner als die Außenabmessungen der Anschlußstutzen. Der Schlauch wird dann beim Aufschieben auf die Anschlußstutzen etwas aufgeweitet. Er sitzt anschließend aufgrund seiner Elastizität mit Preßsitz und damit feuchtigkeitsdicht auf den Anschlußstutzen. Zusätzliche Materialien zum Abdichten der Adern und des Schlauches werden nicht benötigt. Die gesamte Anordnung zwischen den beiden Anschlußstutzen ist so auf einfache Weise feuchtigkeitsdicht abgeschlossen.

Ausführungsbeispiele des Erfindungsgegenstandes sind in den Zeichnungen dargestellt.

Es zeigen:
Fig. 1 in schematischer Darstellung eine Vorrichtung mit einer Anordnung nach der Erfindung.
Fig. 2 die Anordnung nach der Erfindung ebenfalls in schematischer Darstellung.
Fig. 3 eine Einzelheit aus Fig. 2 in veränderter Ausführungsform.

Stellvertretend auch für optische Adern werden in der folgenden Beschreibung nur elektrische Adern zur Herstellung einer elektrisch leitenden Verbindung berücksichtigt.

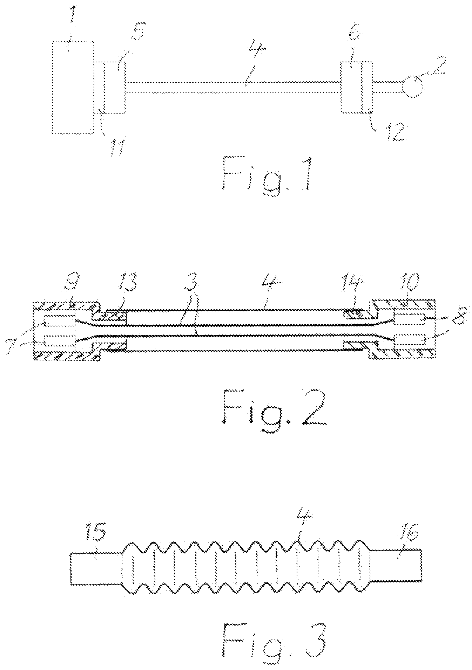

Die in den Fig. 1 und 2 dargestellten Geräte und ihre Einzelteile sind nur schematisch so wiedergegeben, wie es für das Verständnis der Erfindung erforderlich ist. Genauere, grundsätzlich bekannte Einzelheiten sind der Übersichtlichkeit halber nicht mit dargestellt.

In Fig. 1 ist mit 1 ein elektrisches Steuergerät bezeichnet, das nur durch ein Rechteck angedeutet ist. Es ist beispielsweise in einem Personenkraftwagen (PKW) angeordnet. Das Steuergerät 1 soll elektrisch leitend mit einem ebenfalls im PKW montierten Sensor 2 verbunden werden. Dazu werden elektrische Adern 3 (Fig. 2) eingesetzt, die in einem flexiblen Schlauch 4 aus elastischem Isoliermaterial angeordnet sind. Der Übersichtlichkeit halber sind nur zwei Adern 3 eingezeichnet. Ihre tatsächliche Anzahl entspricht den jeweiligen Anforderungen.

Der Schlauch 4 besteht beispielsweise aus Polyamid, Polypropylen oder Polyethylen. Das jeweilige Material ist so ausgeführt, daß der Schlauch 4 mit Vorteil dauerelastisch ist. Er ist feuchtigkeitsdicht mit den Geräten 5 und 6 verbunden. Der Schlauch 4 ist gemäß Fig. 3 zur Verbesserung seiner Biegbarkeit und zur Erhöhung seiner Festigkeit gegen Belastungen in radialer Richtung quer zu seiner Längsrichtung gewellt, mit glatt verlaufenden Enden 15 bzw. 16. Die axiale Länge der glatten Enden 15 und 16 entspricht der axialen Länge der Anschlußstutzen 13 und 14.

An den Enden des Schlauchs 4 ist jeweils eines der als elektrische Geräte ausgeführten Geräte 5 bzw. 6 angebracht, in denen elektrische Kontaktteile 7 bzw. 8 (Fig. 2) angeordnet sind, an welche die elektrischen Leiter der Adern 3 angeschlossen sind. Die Geräte 5 und 6 sind beispielsweise als Stecker mit einem aus Isoliermaterial bestehenden Gehäuse 9 bzw. 10 ausgeführt. Sie können in Montageposition an Gegenstecker 11 und 12 angeschlossen werden, die am Steuergerät 1 angebracht bzw. mit dem Sensor 2 verbunden sind. Zwischen Steckern und Gegensteckern können gegebenenfalls Dichtelemente angebracht sein, wie beispielsweise O-Ringe.

Die Gehäuse 9 und 10 haben jeweils einen rohrförmigen Anschlußstutzen 13 bzw. 14, durch welchen die Adern 3 hindurchgeführt sind. Der Querschnitt der Anschlußstutzen 13 und 14 ist mit Vorteil kreisförmig. Er kann aber auch oval oder polygonal ausgeführt sein. Der Schlauch 4 liegt mit seinen beiden axialen Enden auf jeweils einem der Anschlußstutzen 13 bzw. 14 fest auf, und zwar mit Preßsitz. Das ist dadurch erreicht, daß die lichte Weite des Schlauchs 4 in dessen Ruhestellung an seinen Enden kleiner als die Außenabmessungen der Anschlußstutzen 13 und 14 ist. Beim Aufschieben auf die Anschlußstutzen 13 und 14 wird der aus elastischem Isoliermaterial bestehende Schlauch 4 an seinen Enden aufgeweitet, so daß er in Montageposition den jeweiligen Anschlußstutzen 13 bzw. 14 fest und dicht und insbesondere feuchtigkeitsdicht umgibt, ohne daß zusätzliche Maßnahmen zum feuchtigkeitsdichten Verbinden von Schlauch 4 und Geräten 5 und 6 erforderlich sind.

Wenn das Steuergerät 1 einen eigenen rohrförmigen Anschlußstutzen hat, dann kann der Schlauch 4 auch direkt mit Preßsitz auf diesen Anschlußstutzen aufgebracht werden. Die Verbindungsstelle zwischen Schlauch 4 und Anschlußstutzen ist auch dann ohne zusätzliches Material zum Abdichten feuchtigkeitsdicht ausgeführt. Die Adern 3 werden durch einen solchen Anschlußstutzen in das eine Einheit von elektrischen Kontaktteilen umschließende Steuergerät 1 hindurchgeführt und mit den Kontaktteilen verbunden. Dieser Sachverhalt gilt auch für den Sensor 2, wenn derselbe mit einem entsprechenden Gehäuse mit Anschlußstutzen ausgerüstet ist.

## Patentansprüche

1. Anordnung zum feuchtigkeitsdichten Verbinden von zwei Geräten, welche mindestens zwei, von einem flexiblen, aus Isoliermaterial bestehenden Schlauch umschlossene, isolierte elektrische und/oder optische Leiter aufweist, die an die beiden Geräte anschließbar sind, bei welcher jedes der Geräte mit einem der Festlegung des Schlauchs dienenden, rohrförmigen Anschlußstutzen ausgerüstet ist, **dadurch gekennzeichnet,**
- **daß** der Schlauch (4) bis auf seine beiden axialen Enden, die auf einer der axialen Länge der Anschlußstutzen (13,14) der beiden Geräte (5,6) entsprechenden Länge glatt ausgeführt sind, quer zu seiner Längsrichtung gewellt ist,
- **daß** die lichte Weite des Schlauchs (4) in Ruhestellung an seinen beiden Enden kleiner als die Außenabmessungen der Anschlußstutzen (13,14) der beiden Geräte (5,6) ist und
- **daß** der aus elastischem Isoliermaterial bestehende Schlauch (4) in Montageposition die Anschlußstutzen (13,14) der beiden Geräte (5,6) an seinen Enden mit Preßsitz umschließt.

2. Anordnung nach Anspruch 1, **dadurch gekennzeichnet, daß** der Schlauch (4) aus dauerelastischem Isoliermaterial besteht.

## Claims

1. An arrangement for the waterproof connection of two devices (9,10), comprising at least two electrical and/or optical lines (3) which are surrounded by a flexible hose (4) made of an elastic insulating material connectable to the two devices, wherein each of the devices (9,10) has a tube like connection piece (13,14) for the fastening of the hose (4), **characterized in**
- **that** the hose (4) is corrugated perpendicular to its longitudinal axis, except of its two axial ends, which are smooth on a length which corresponds to the axial length of the connection pieces (13,14) of the devices (9,10)
- **that** the inside diameter of the hose (4) at its two ends in resting position is smaller than the outer dimensions of the connection pieces (13,14) of the devices (5,6) and
- **that** the hose (4) which consists of elastic insulation material in mounting position surrounds the connection pieces (13,14) of the devices (5,6) with its ends with press fit.

2. Arrangement according to claim 1, **characterized in that** the hose (4) consists of a permanent elastic insulating material.

## Revendications

1. Arrangement de liaison avec étanchéité à l'humidité de deux appareils, lequel possède au moins deux conducteurs électriques et/ou optiques isolés, entourés par une gaine flexible constituée d'un matériau isolant, qui peuvent être raccordés aux deux appareils, chacun des appareils étant équipé d'un manchon de raccordement de forme tubulaire servant au blocage de la gaine, **caractérisé en ce**
- **que** la gaine (4) est ondulée transversalement à son sens longitudinal, à l'exception de ses deux extrémités axiales qui sont exécutées lisses sur une longueur correspondant à la longueur axiale des manchons de raccordement (13, 14) des deux appareils (5, 6),
- **que** l'ouverture utile de la gaine (4) en position de repos est plus petite à ses deux extrémités que les dimensions extérieures des manchons de raccordement (13, 14) des deux appareils (5, 6) et
- **que** la gaine (4) composée de matériau isolant élastique, en position de montage, entoure les manchons de raccordement (13, 14) des deux appareils (5, 6) au niveau de ses extrémités avec ajustement serré.

2. Arrangement selon la revendication 1, **caractérisé en ce que** la gaine (4) se compose d'un matériau isolant à élasticité permanente.
